# EUROPEAN PATENT APPLICATION

(11) **EP 3 876 066 A2**
(43) Date of publication of application: **08.09.2021**
(21) Application number: 21186058.0
(22) Date of filing: 16.07.2021
(51) Int. Cl.: G05D 1/00, B60W 60/00

(54) **REMOTE CONTROL METHOD, APPARATUS AND COMPUTER PROGRAM PRODUCT**

(30) Priority: 22.12.2020 CN 202011536110
(71) Applicant: BEIJING BAIDU NETCOM SCIENCE AND TECHNOLOGY CO. LTD., 100085 Beijing (CN)
(72) Inventor: FENG, Jingchao, BEIJING, 100085 (CN); SUN, Qingrui, BEIJING, 100085 (CN); ZHENG, Pengjie, BEIJING, 100085 (CN); CUI, Tianxiang, BEIJING, 100085 (CN); XIA, Liming, BEIJING, 100085 (CN); CHEN, Zhuo, BEIJING, 100085 (CN); DU, Xiaochuan, BEIJING, 100085 (CN)
(74) Representative: Bittner, Bernhard

(57) **Abstract**

A remote control method, apparatus and a computer program product are provided. The method includes: receiving first remote control request information sent by a cloud, the first remote control request information is sent by the cloud after receiving second remote control request information sent by the vehicle to the cloud; sending a control parameter synchronization signal of a cab to the cloud such that the cloud can send the control parameter synchronization signal to the vehicle, so that the vehicle can synchronize the control parameter with the cab; sending verification information for taking over vehicle control to the cloud to enable the cloud to switch on a control channel between the vehicle and the cab; and sending a control signal by the cab against the vehicle and receiving a response signal from the vehicle against the control signal by the cab through the control channel.

## Description

### TECHNICAL FIELD

The present disclosure relates to the technical field of data processing, and in particular, to the technical fields of artificial intelligence and automated driving.

### BACKGROUND

With the development of economy and technology, vehicles have gradually become a travel tool commonly used in people's daily life. Early vehicle driving include only manual driving. Nowadays, driving of a vehicle may be performed by manual driving, automated driving, or the like.

In the process of automated driving, sudden situations such as bad weather and traffic control will occur, and situations such as intoxication of the driver and the like which are not suitable for driving temporarily can occur during the manual driving, so that a method needs to be provided for dealing with the situations of automated driving and manual driving so as to improve the driving safety.

### SUMMARY

The present disclosure provides a remote control method, a cab, a cloud server and an autonomous vehicle.

According to an aspect of the present disclosure, a remote control method is provided and includes:
receiving first remote control request information sent by a cloud, the first remote control request information indicating that a vehicle requests for remote control;
sending a control parameter synchronization signal of a cab to the vehicle via the cloud, the control parameter synchronization signal being configured for synchronization of a control parameter between the vehicle and the cab;
sending verification information for taking over vehicle control to the cloud so as to enable the cloud to switch on a control channel between the vehicle and the cab based on the verification information; and
after the control channel between the vehicle and the cab is switched on, sending a control signal by the cab against the vehicle and receiving a response signal from the vehicle against the control signal by the cab through the control channel.

According to another aspect of the present disclosure, a remote control method is provided and includes:
sending first remote control request information to a cab based on second remote control request information sent by a vehicle;
receiving a control parameter synchronization signal sent by the cab and verification information for taking over vehicle control;
sending the control parameter synchronization signal to the vehicle, the control parameter synchronization signal being configured for synchronization of a control parameter between the vehicle and the cab; and
switching on a control channel between the vehicle and the cab based on the verification information.

According to another aspect of the present disclosure, a remote control method is provided and includes:
sending second remote control request information to a cloud;
receiving a control parameter synchronization signal of the cab sent by the cloud, and performing synchronization of a control parameter with the cab according to the control parameter synchronization signal; and
after a control channel between a vehicle and the cab is switched on, receiving a control signal by the cab against the vehicle and sending a response signal by the vehicle against the control signal to the cab through the control channel.

According to another aspect of the present disclosure, a remote control apparatus is provided and includes:
a first remote control request information receiving module, configured for receiving first remote control request information sent by a cloud, the first remote control request information indicating that a vehicle requests for remote control;
a control parameter synchronization signal sending module, configured for sending a control parameter synchronization signal of a cab to the vehicle via the cloud, the control parameter synchronization signal being configured for synchronization of a control parameter between the vehicle and the cab;
a verification information sending module, configured for sending verification information for taking over vehicle control to the cloud so as to enable the cloud to switch on a control channel between the vehicle and the cab based on the verification information; and
a controlling module, configured for, after the control channel between the vehicle and the cab is switched on, sending a control signal by the cab against the vehicle and receiving a response signal from the vehicle against the control signal by the cab through the control channel.

According to another aspect of the present disclosure, a remote control apparatus is provided and includes:
a remote control request information forwarding module, configured for sending first remote control request information to a cab based on second remote control request information sent by a vehicle;
a verification and synchronization receiving module, configured for receiving a control parameter synchronization signal sent by the cab and verification information for taking over vehicle control;
a synchronous forwarding module, configured for sending the control parameter synchronization signal to the vehicle, the control parameter synchronization signal being configured for synchronization of a control parameter between the vehicle and the cab; and
a verification module, configured for switching on a control channel between the vehicle and the cab based on the verification information.

According to another aspect of the present disclosure, a remote control apparatus is provided and includes:
a second remote control request information sending module, configured for sending second remote control request information to the cloud;
a control parameter synchronization module, configured for receiving a control parameter synchronization signal of the cab sent by the cloud, and performing synchronization of a control parameter with the cab according to the control parameter synchronization signal; and
an execution module, configured for, after a control channel between a vehicle and the cab is switched on, receiving a control signal by the cab against the vehicle and sending a response signal by the vehicle against the control signal to the cab through the control channel.

According to another aspect of the present disclosure, there is provided a remote control system including a remote control apparatus applied in a cab, a cloud or a vehicle.

According to another aspect of the present disclosure, there is provided an electronic device including:
at least one processor; and
a memory communicatively connected to the at least one processor; wherein,
the memory stores instructions executable by the at least one processor to enable the at least one processor to implement the method provided by any one of embodiments of the present disclosure.

According to another aspect of the present disclosure, there is provided a non-transitory computer-readable storage medium storing computer instructions for causing a computer to implement the method provided by any one of embodiments of the present disclosure.

According to another aspect of the present disclosure, there is provided a cab including:
at least one processor; and
a memory communicatively connected to the at least one processor; wherein,
the memory stores instructions executable by the at least one processor to enable the at least one processor to implement the method provided by any one of embodiments of the present disclosure.
According to another aspect of the present disclosure, there is provided a cloud server including:
at least one processor; and
a memory communicatively connected to the at least one processor; wherein,
the memory stores instructions executable by the at least one processor to enable the at least one processor to implement the method provided by any one of embodiments of the present disclosure.

According to another aspect of the present disclosure, there is provided an autonomous vehicle including:
at least one processor; and
a memory communicatively connected to the at least one processor; wherein,
the memory stores instructions executable by the at least one processor to enable the at least one processor to implement the method provided by any one of embodiments of the present disclosure.

According to another aspect of the present disclosure, there is provided a computer program product including a computer program which, when executed by a processor, implements the method provided by any one of embodiments of the present disclosure.

The technical solution according to the present disclosure solves the signal transmission problem in the remote parallel driving process, improves the reliability of signal transmission in the parallel driving process, so that the vehicle can request remote assistance through parallel driving when needed, which improves driving safety.

It is to be understood that the contents in this section are not intended to identify the key or critical features of the embodiments of the present disclosure, and are not intended to limit the scope of the present disclosure. Other features of the present disclosure will become readily apparent from the following description.

### BRIEF DESCRIPTION OF THE DRAWINGS

The drawings are included to provide a better understanding of the present disclosure and are not to be construed as limiting the present disclosure, in which:
FIG. 1 is a schematic diagram of a remote control method according to a first embodiment of the present disclosure;
FIG. 2 is a schematic diagram of a remote control method according to another embodiment of the present disclosure;
FIG. 3 is a schematic diagram of a remote control method according to yet another embodiment of the present disclosure;
FIG. 4 is a schematic diagram of a remote control method according to still another embodiment of the present disclosure;
FIG. 5 is a schematic diagram of a remote control method according to yet still another embodiment of the present disclosure;
FIG. 6 is a schematic diagram of a cloud and a vehicle terminal according to another embodiment of the present disclosure;
FIG. 7 is a schematic diagram of a cab in an example of the present disclosure;
FIG. 8 is a schematic diagram of a remote control apparatus according to an embodiment of the present disclosure;
FIG. 9 is a schematic diagram of a remote control apparatus according to another embodiment of the present disclosure;
FIG. 10 is a schematic diagram of a remote control apparatus according to yet another embodiment of the present disclosure;
FIG. 11 is a schematic diagram of a remote control apparatus according to still another embodiment of the present disclosure;
FIG. 12 is a schematic diagram of a remote control apparatus according to yet still another embodiment of the present disclosure;
FIG. 13 is a schematic diagram of a remote control apparatus according to another embodiment of the present disclosure;
FIG. 14 is a schematic diagram of a remote control apparatus according to yet another embodiment of the present disclosure;
FIG. 15 is a schematic diagram of a remote control apparatus according to still another embodiment of the present disclosure;
FIG. 16 is a schematic diagram of a remote control apparatus according to yet still another embodiment of the present disclosure;
FIG. 17 is a schematic diagram of a remote control apparatus according to a further embodiment of the present disclosure;
FIG. 18 is a schematic diagram of a display sending module according to another embodiment of the present disclosure;
FIG. 19 is a schematic diagram of a remote control system according to an embodiment of the present disclosure;
FIG. 20 is a schematic diagram of a remote control system according to another embodiment of the present disclosure;
FIG. 21 is a schematic diagram of a remote control system according to yet another embodiment of the present disclosure;
FIG. 22 is a schematic diagram of a remote control system according to still another embodiment of the present disclosure;
FIG. 23 is a schematic diagram of operational steps of a remote control system according to another embodiment of the present disclosure;
FIG. 24 is a block diagram of an electronic device configured for implementing the remote control method according to an embodiment of the present disclosure.

### DETAILED DESCRIPTION

Reference will now be made in detail to the exemplary embodiments of the present disclosure, examples of which are illustrated in the accompanying drawings, where the various details of the embodiments of the present disclosure are included to facilitate understanding and are to be considered as exemplary only. Accordingly, those skilled in the art should appreciate that various changes and modifications can be made to the embodiments described herein without departing from the scope and spirit of the present disclosure. Also, descriptions of well-known functions and structures are omitted from the following description for clarity and conciseness.

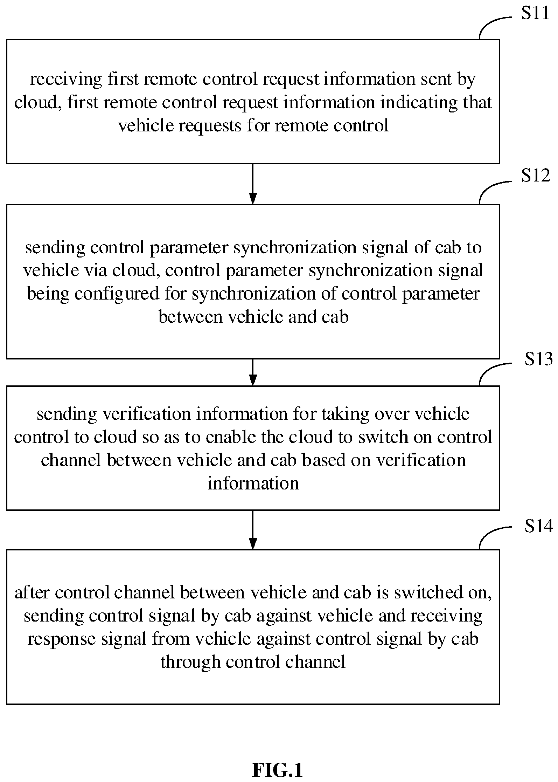

An embodiment of the present disclosure first provides a remote control method, as shown in FIG. 1, including:
Step S11. receiving first remote control request information sent by a cloud, the first remote control request information indicating that a vehicle requests for remote control;
Step S12. sending a control parameter synchronization signal of a cab to the vehicle via the cloud, the control parameter synchronization signal being configured for synchronization of a control parameter between the vehicle and the cab;
Step S13. sending verification information for taking over vehicle control to the cloud so as to enable the cloud to switch on a control channel between the vehicle and the cab based on the verification information; and
Step S14. after the control channel between the vehicle and the cab is switched on, sending a control signal by the cab against the vehicle and receiving a response signal from the vehicle against the control signal by the cab through the control channel.

The above steps S 11-S 14 can be performed at one end of the cab. The above steps S12 and S13 can be partially executed sequentially.

In this embodiment, the first remote control request information may be the same as the second remote control request information. After the vehicle sends the second remote control request information to the cloud, the cloud can forward the second remote control request information as the first remote control request information to one end of the control cab.

The second remote control request information may be sent by the vehicle in a case that it encounters a special situation. For example, the vehicle travels to a complex road section, the vehicle encounters traffic control, the vehicle encounters special weather, and so on. It may also be sent in response to an instruction from an operator who operates the vehicle.

In this embodiment, the cab sends the initial control parameter of the cab as a control parameter synchronization signal to the cloud, so that the cloud forwards the control parameter synchronization signal to the vehicle.

Specifically, the control parameter synchronization signal may be a control parameter related to control in the cab, for example, steering wheel data, throttle data, brake data, etc. in the cab.

The control parameter synchronization signal can specifically also be a request or instruction for a synchronization signal. After the cloud sends the control parameter synchronization signal to the vehicle, the vehicle and the cab can continue to send data of control parameters to each other through the cloud so that both parties' control parameters are synchronized.

The control parameter synchronization signal may be sent, specifically in a case that the cab is determined to be currently in a state where parallel driving is possible. In a case that the cab is malfunctioning or the cab operator is currently not suitable for operating the cab, a signal to reject parallel driving may be sent.

In this embodiment, the verification information may be a specific control instruction generated by the cab. In a case that the cloud confirms that the control can receive the verification information, and the format and content of the verification information are correct, the control channel between the vehicle and the cab can be switched on.

In this embodiment, in a case that the vehicle encounters a situation that requires parallel driving, it sends a second remote control request to the cloud, so that the cloud sends the first remote control request to the cab according to the second remote control request. In the process of parallel driving, there is a corresponding relationship between the cab and the controlled vehicle. The cab can control only one vehicle.

In this embodiment, the cloud can select a cab adapted to send the second remote control request according to the driving history of the cab, and send the first remote control request to it.

In the embodiment of the present disclosure, in a case that the vehicle needs to request remote driving, it can send to the cloud information requesting remote control from the cab. After the cloud forwards the information, the cab and the vehicle synchronize the control parameters, afterwards, through the control channel between the cab and the vehicle, the control signal between the cab and the vehicle and the response signal against the control signal or other signals necessary for vehicle driving are transmitted, so as to realize the remote control of the vehicle from the cab. It can solve the problem of requesting remote assistance in a case that an autonomous vehicle or a non-autonomous vehicle encounters a situation that requires remote control.

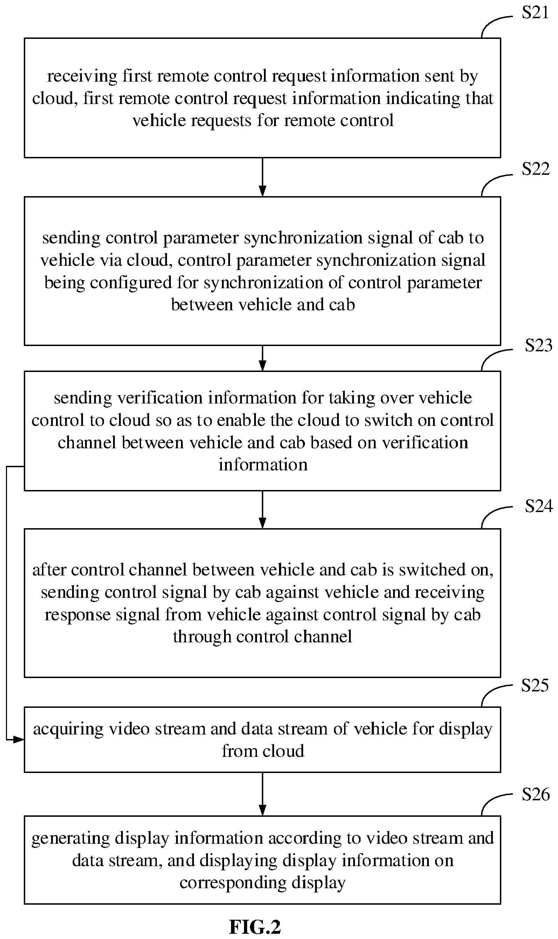

In an embodiment, as shown in FIG. 2, the remote control method includes steps S21, S22, S23 and S24 which are the same with above-mentioned steps S11, S12, S13 and S14 respectively, and further includes:
Step S25. acquiring a video stream and a data stream of the vehicle for display from the cloud; and
Step S26. generating display information according to the video stream and the data stream, and displaying the display information on a corresponding display.

The above steps S25 and S26 may be executed by the cab.

In the embodiment of the present disclosure, acquiring the video stream and data stream for display may be acquired from a cloud other than the cloud that sends the first remote control request. For example, the cab acquires the video stream and data stream for display from the cloud of the cab provider, and receives first remote control request information from the IoT (Internet of Things) cloud.

In this embodiment, the video stream may include exterior scene data within the view field of the front windshield window of the vehicle, which may be captured by a camera set on the vehicle; it may also include exterior scene data within the view field of the windows on both sides of the front end of the vehicle, which may be captured by cameras installed on both sides of the vehicle; it may also include data such as vehicle rearview mirrors and on-board radars, which can be acquired by cameras or vehicle radars installed in corresponding positions of the vehicle.

In this embodiment, the data stream may include dashboard data in the vehicle and other parameters that need to be acquired from the vehicle.

In this embodiment, the data stream may also include data of other vehicles around the vehicle detected by sensors provided on the vehicle.

The data of other vehicles around the vehicle can also be acquired by shooting with a camera provided on the outside of the vehicle.

In this embodiment, a video stream and a data stream are acquired, and a display screen is generated according to the video stream and data stream, and displayed on the display corresponding to the cab, so that the operator in the cab can intuitively acquire the data required in the driving process from the display.

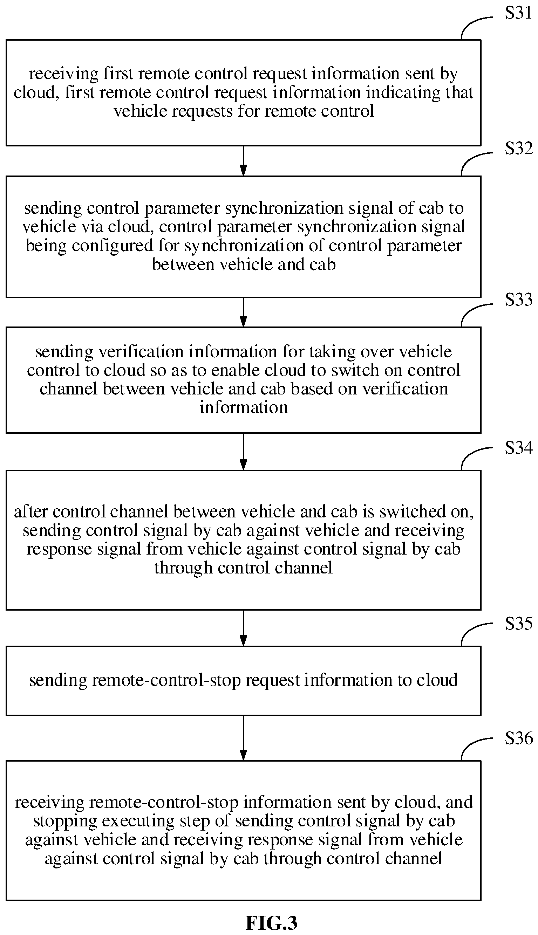

In an embodiment, as shown in FIG. 3, the remote control method includes steps S31, S32, S33 and S34 which are the same with above-mentioned steps S11, S12, S13 and S14 respectively, and further includes:
Step S35. sending remote-control-stop request information to the cloud; and
Step S36. receiving remote-control-stop information sent by the cloud, and stopping executing the step of sending the control signal by the cab against the vehicle and receiving the response signal from the vehicle against the control signal by the cab through the control channel.

The abovementioned remote-control-stop information is sent by the cloud based on the received remote-control-stop request information.

After the remote parallel driving is over, remote-control-stop information can be sent to the cloud to stop the signal transmission and reception between the vehicle and the cab, and the cloud will make the transition of the vehicle from remote driving to self-driving, and the vehicle can switch to automated driving or manual driving.

In the embodiments of the present disclosure, the remote control can be stopped according to the remote-control-stop request information of the cab, so that after the remote control ends, the vehicle control can be returned to the vehicle.

In an embodiment, after acquiring the video stream of the vehicle for display, the method further includes:
converting the video stream into a viewable network signal using a real-time communication network software toolkit; and
displaying the network signal through an authorized viewing account.

In this embodiment, a browser can be used to log in to a viewing account and watch a video stream, to provide related operators with a variety of video data viewing methods. At the same time, it can also enable related operators to conduct monitoring of vehicle driving status through more channels.

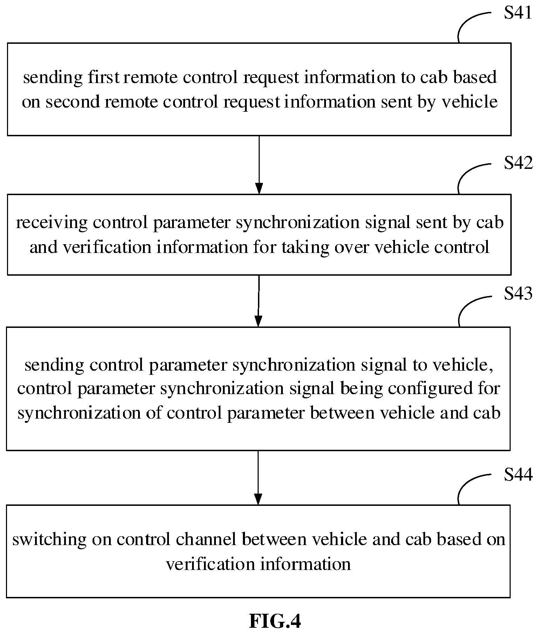

An embodiment of the present disclosure further provides a remote control method, as shown in FIG. 4, including:
Step S41. sending first remote control request information to a cab based on second remote control request information sent by a vehicle;
Step S42. receiving a control parameter synchronization signal sent by the cab and verification information for taking over vehicle control;
Step S43. sending the control parameter synchronization signal to the vehicle, the control parameter synchronization signal being configured for synchronization of a control parameter between the vehicle and the cab; and
Step S44. switching on a control channel between the vehicle and the cab based on the verification information.

In this embodiment, steps S41-S44 can be performed in the cloud.

The cloud may send first remote control request information to the cab based on the second remote control request information sent by the vehicle, and in a case that the vehicle responds to the first remote control request information and sends a control parameter synchronization signal to the cloud, the control parameter synchronization signal is sent to the vehicle so that the vehicle can synchronize the control parameter with the cab. After the control parameters are synchronized, the verification can be performed based on the verification information, and after the verification is passed, the control channel between the vehicle and the cab is switched on, so that the cab can directly control the vehicle remotely through the control channel. It realizes the function that automated driving vehicle or manual driving vehicle requests remote control under special circumstances, which can deal with special events such as special weather, traffic control or the driver's own reasons encountered by the driver or the vehicle.

In an embodiment, the signal processing method further includes:
receiving remote-control-stop request information sent by the cab;
sending remote-control-stop information to the cab and sending automated-driving-transition information to the vehicle; and
switching off the control channel between the cab and the vehicle.

At the end of the driving, the cloud can switch off the control channel between the cab and the vehicle through the above steps, and end the remote control of the vehicle by the cab.

In an embodiment, the remote control method further includes:
acquiring a video stream and a data stream of the vehicle for display; and
sending the video stream and the data stream to the cab.

The abovementioned video stream and data stream for display may be collected, generated, and provided by the vehicle. It can be collected by any data collection device installed on the vehicle, including video collection device, audio collection device and radar signal collection device.

In the specific embodiment of the present disclosure, the abovementioned step of acquiring the video stream and the data stream and sending the video stream and the data stream to the cab may be performed by another cloud.

In the specific embodiment of the present disclosure, the cloud that executes the remote control method may include one or more clouds.

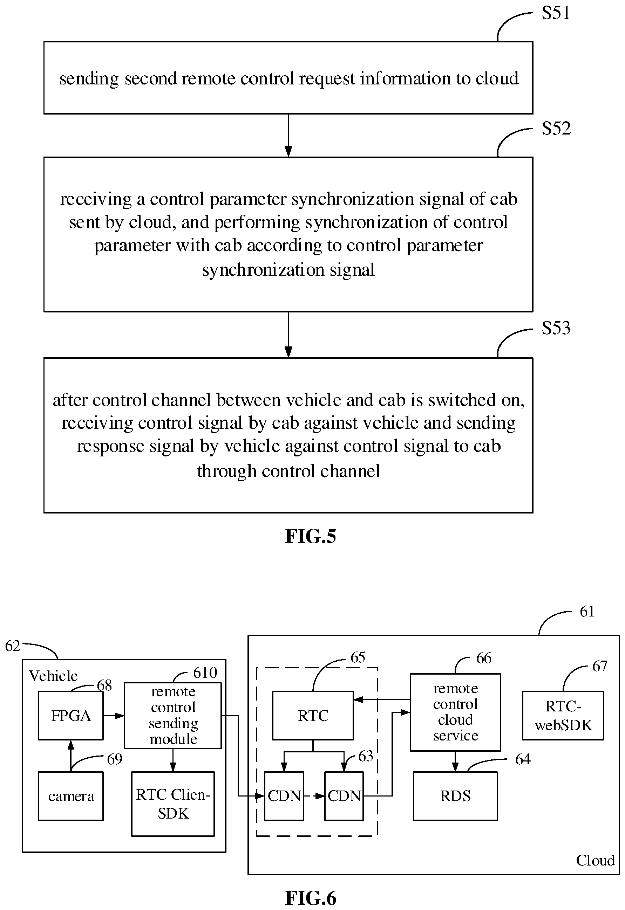

An embodiment of the present disclosure further provides a remote control method, as shown in FIG. 5, including:
Step S51. sending second remote control request information to a cloud;
Step S52. receiving a control parameter synchronization signal of the cab sent by the cloud, and performing synchronization of a control parameter with the cab according to the control parameter synchronization signal; and
Step S53. after a control channel between a vehicle and the cab is switched on, receiving a control signal by the cab against the vehicle and sending a response signal by the vehicle against the control signal to the cab through the control channel.

In an embodiment, the remote control method further includes:
receiving automated-driving-transition information sent by the cloud; and
performing automated driving according to the automated-driving-transition information, and stopping executing the step of receiving the control signal by the cab against the vehicle and sending the response signal by the vehicle against the control signal to the cab through the control channel.

In a specific example, the automated-driving-transition information may be stop information. After receiving the stop information, stop the vehicle, and then restart the vehicle to perform automated driving after the vehicle is completely stopped.

The automated-driving-transition information may also be information for instructing to switch the current driving state to the non-parallel driving state.

In this embodiment, after the parallel driving is finished, it can switch to the automated driving state according to the relevant information sent by the cloud, so that the driving authority can be returned to the vehicle after the vehicle has passed the difficult stage of the driving process, without affecting normal use of the vehicle.

In an embodiment, the remote control method further includes:
sending a video stream and a data stream of the vehicle for display to the cloud.

The protocols used when the video stream of the vehicle for display is sent to the cloud are a user datagram protocol and a real-time transmission protocol created on the basis of the user datagram protocol.

In this embodiment, the video stream is transmitted using the user datagram protocol and the real-time transmission protocol, which can ensure the effectiveness and real-time performance of the video stream transmission.

In an embodiment, the sending the data stream of the vehicle for display to the cloud includes:
packaging the data stream into data in a digital video format; and
sending the data in the digital video format to the cloud through a transmission control protocol link in real-time communication.

In this embodiment, the data stream is packaged into a specific format, and the RTC TCP data link is used for transmission, which can ensure that key data is not discarded, and ensure the real-time and effectiveness of data transmission.

The remote control method provided by the embodiments of the present disclosure can be applied to the field of automated driving, for example, it can be applied to unmanned products, including unmanned vehicles. The embodiment of the present disclosure controls the remote vehicle in real time through the cloud cab, which is equivalent to the remote driver sitting in the vehicle and driving, but the direct control relies heavily on the network, and currently, relatively good effects can be achieved under 5G network.

In an example of the present disclosure, in the process of controlling the vehicle by the cab, video stream in the vehicle camera is transmitted back in real time, and a section of the vehicle may specifically involve multiple (for example, 9) cameras to perform video surround view collection, secure transmission, while allowing real-time viewing in the cloud. The module can be configured according to higher delay requirements.

As shown in FIG. 6, the cloud 61 and the vehicle 62 communicate using the RTC (Real Time Communication) protocol. Here, RTC supports real-time video communication, and its time delay is about less than 300ms. In an example, the application protocol used by the vehicle 62 and the cloud 61 is real-time transmission protocol RTP (Real Time Protocol), and the transmission protocol is UDP (User Datagram Protocol).

Still referring to FIG. 6, the cloud 61 using RTC-webSDK67 (RTC-web Software Development Kit) can allow multiple users to watch the video stream of a specific vehicle using a browser at the same time, or restrict only authorized users to watch the video stream of the vehicle.

Multiple CDN (Content Delivery Network) nodes 63 for data delivery and RDS64 relational databases can be provided in the cloud 61. The RTC module 65 in the cloud obtains temporary tokens related to the vehicle or the cab from the remote control cloud service 66, and the CDN nodes 63 input the data that needs to be backed up and other related data into the remote control cloud service 66, and then into RDS64 for storage.

The cloud 61 connects the vehicle 62, the cab and the remote driver in series, and is responsible for the normal work of the vehicle status monitoring and the relief process. The remote driver can log in to the cloud platform through the network access tool in the cab to watch the vehicle status in real time. After initiating a trap request at the vehicle, the request is accepted to complete the matching of the trapped vehicle and the remote cab, and to ensure the reliability and integrity of the relief process.

After the video stream is collected by the camera 69 on the vehicle 62, it is processed by an FPGA (Field Programmable Gate Array) 68, and then sent to the cloud 61 through the remote control sending module 610. The RTC Client SDK (real-time communication client software development kit) is also provided on the vehicle 62 to support users of the cloud 61 to watch the video stream.

The vehicle subscribes to the topic of the control channel of the autopilot system, acquires the vehicle body state, obstacles, traffic lights, driving trajectory and other data through its own control channel, and packages it into a vehicle DV (Digital Video) format and forwards it to the cloud. The data stream uses the RTC TCP data link for transmission, which can ensure that key data is not discarded, and is synchronized with the video stream data to ensure that the driver in the cab obtains real-time vehicle and environmental status when making decisions.

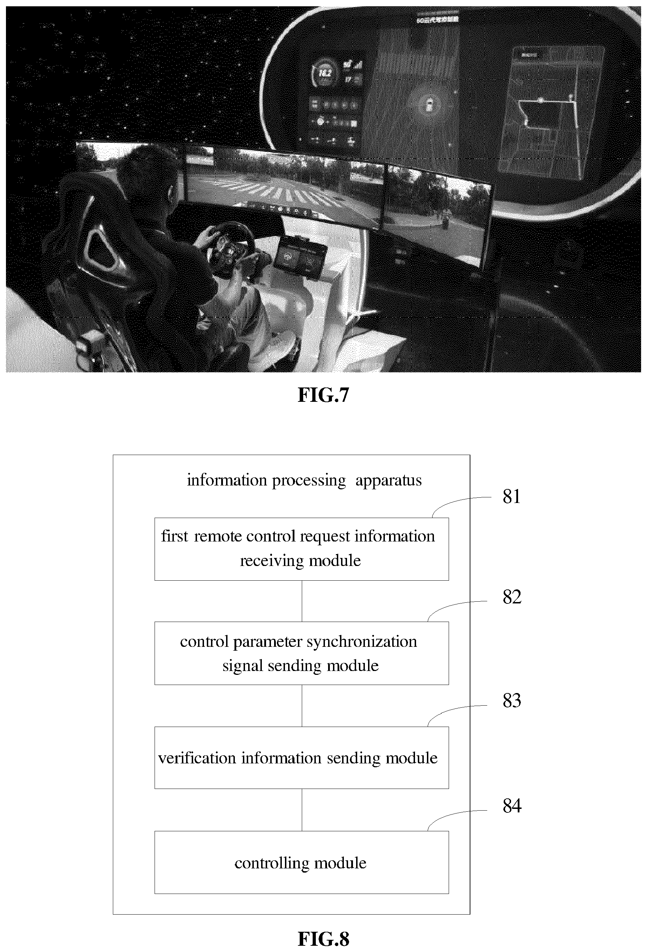

In an example of the present disclosure, the remote cab is composed of a steering wheel, an accelerator and brake pedal, a display * 3, a large TV screen, and a host, for example, as shown in FIG. 7. Through the steering wheel and the accelerator and brake pedal, the driver in the cab can accurately control the corresponding controlled vehicle. The display is used to display video data around the vehicle, and the large TV screen is used to display information such as vehicle status, location, and surrounding environment. The host is used to carry all the calculation tasks in the cab.

In a case that the cab receives the first remote control request sent by the cloud, first observe the surrounding road conditions of the vehicle through the cab platform, and the vehicle has transmitted the real-time video stream in multiple cameras back to the control center; at the same time, the remote driver in the cab can also see the real-time obstacle information output by the vehicle's automated driving perception algorithm. The remote driver observes and judges that it can assist the vehicle to relief and receives assistance requests, and selects the parallel driving mode. The remote driver generates control commands by selecting to manipulate the steering wheel, accelerator and/or brake, and sends them to the vehicle.

During parallel driving, the driver complies with the traffic rules and avoids obstacles according to the video and vehicle status. In a case that the safety redundancy system detects that the remote control function is faulty, the vehicle is triggered to re-enter the safe state to request remote control, and the process of requesting remote control and cab response is re-executed.

In a case that the remote driver observes that the vehicle has finished the relief and the vehicle system confirms that the driving is over, the driver will issue a normal unmanned driving instruction through the cab, and the remote driver will complete the remote assistance task for the vehicle.

An embodiment of the present disclosure further provides a remote control apparatus which can be applied in a cab. As shown in FIG. 8, the apparatus includes:
a first remote control request information receiving module 81, configured for receiving first remote control request information sent by a cloud, the first remote control request information indicating that a vehicle requests for remote control;
a control parameter synchronization signal sending module 82, configured for sending a control parameter synchronization signal of a cab to the vehicle via the cloud, the control parameter synchronization signal being configured for synchronization of a control parameter between the vehicle and the cab;
a verification information sending module 83, configured for sending verification information for taking over vehicle control to the cloud so as to enable the cloud to switch on a control channel between the vehicle and the cab based on the verification information; and
a controlling module 84, configured for, after the control channel between the vehicle and the cab is switched on, sending a control signal by the cab against the vehicle and receiving a response signal from the vehicle against the control signal by the cab through the control channel.

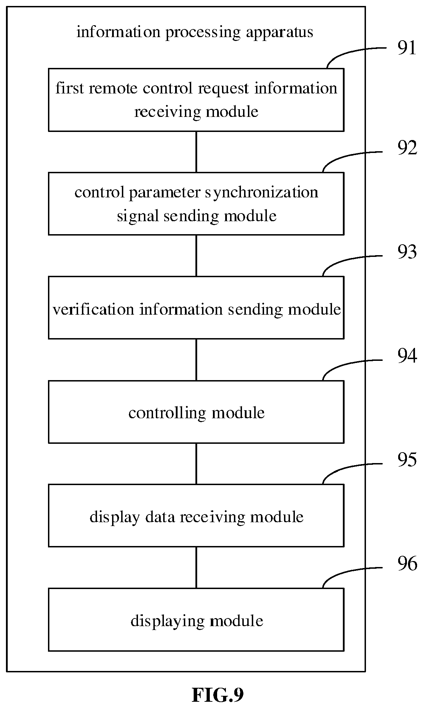

In an embodiment, as shown in FIG. 9, the remote control apparatus includes a first remote control request information receiving module 91, a control parameter synchronization signal sending module 92, a verification information sending module 93 and a controlling module 94 which are the same with above-mentioned modules 81, 82, 83 and 84 respectively, and further includes:
a display data receiving module 95, configured for acquiring a video stream and a data stream of the vehicle for display from the cloud; and
a displaying module 96, configured for generating display information according to the video stream and the data stream, and displaying the display information on a corresponding display.

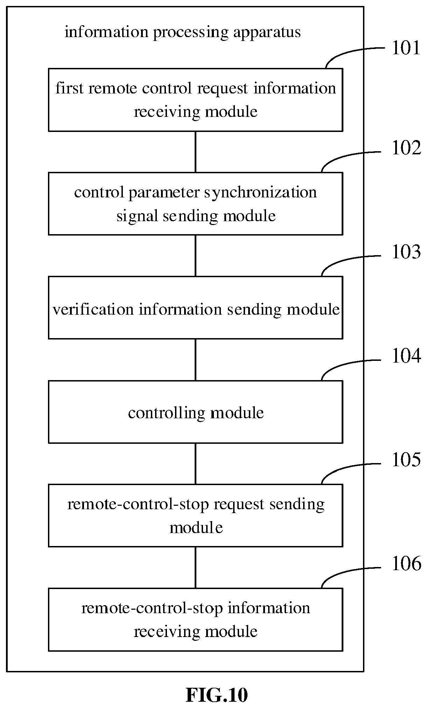

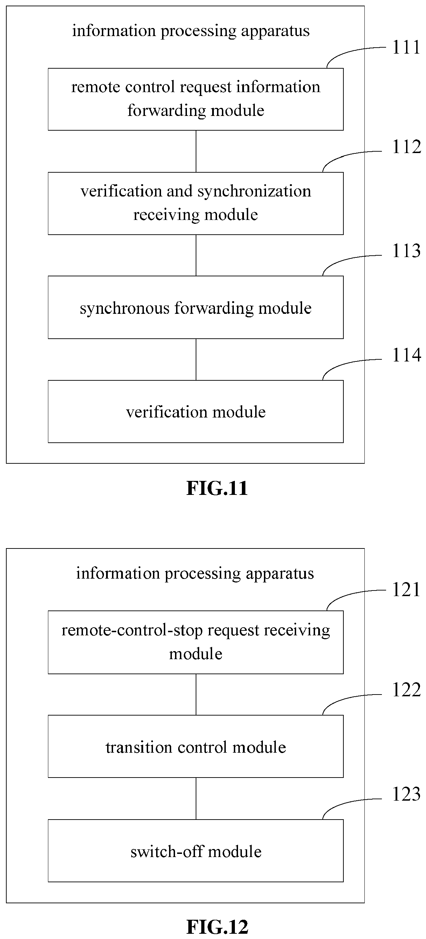

In an embodiment, as shown in FIG. 10, the remote control apparatus includes a first remote control request information receiving module 101, a control parameter synchronization signal sending module 102, a verification information sending module 103 and a controlling module 104 which are the same with the above-mentioned modules 81, 82, 83 and 84 respectively, and further includes:
a remote-control-stop request sending module 105, configured for sending remote-control-stop request information to the cloud; and
a remote-control-stop information receiving module 106, configured for receiving remote-control-stop information sent by the cloud, and stopping executing the step of sending the control signal by the cab against the vehicle and receiving the response signal from the vehicle against the control signal by the cab through the control channel.
An embodiment of the present disclosure further provides a remote control apparatus which can be applied in a cab. As shown in FIG. 11, the apparatus includes:
a remote control request information forwarding module 111, configured for sending first remote control request information to a cab based on second remote control request information sent by a vehicle;
a verification and synchronization receiving module 112, configured for receiving a control parameter synchronization signal sent by the cab and verification information for taking over vehicle control;
a synchronous forwarding module 113, configured for sending the control parameter synchronization signal to the vehicle, the control parameter synchronization signal being configured for synchronization of a control parameter between the vehicle and the cab; and
a verification module 114, configured for switching on a control channel between the vehicle and the cab based on the verification information.

In an embodiment, as shown in FIG. 12, the remote control apparatus further includes:
a remote-control-stop request receiving module 121, configured for receiving remote-control-stop request information sent by the cab;
a transition control module 122, configured for sending remote-control-stop information to the cab and sending automated-driving-transition information to the vehicle; and
a switch-off module 123, configured for switching off the control channel between the cab and the vehicle.

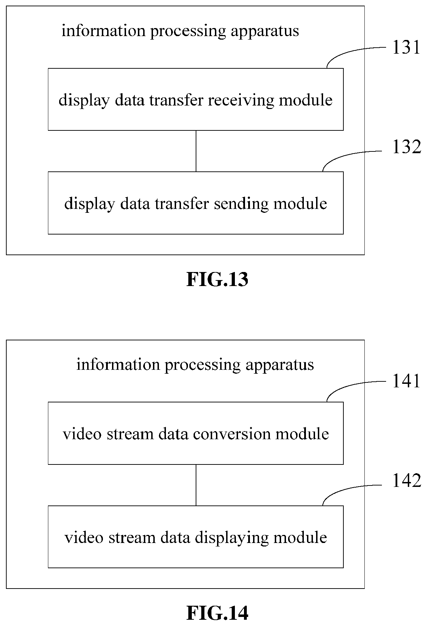

In an embodiment, as shown in FIG. 13, the remote control apparatus further includes:
a display data transfer receiving module 131, configured for acquiring a video stream and a data stream of the vehicle for display; and
a display data transfer sending module 132, configured for sending the video stream and the data stream to the cab.

In an embodiment, as shown in FIG. 14, the remote control apparatus further includes:
a video stream data conversion module 141, configured for converting the video stream into a viewable network signal using a real-time communication network software toolkit; and
a video stream data displaying module 142, configured for displaying the network signal through an authorized viewing account.

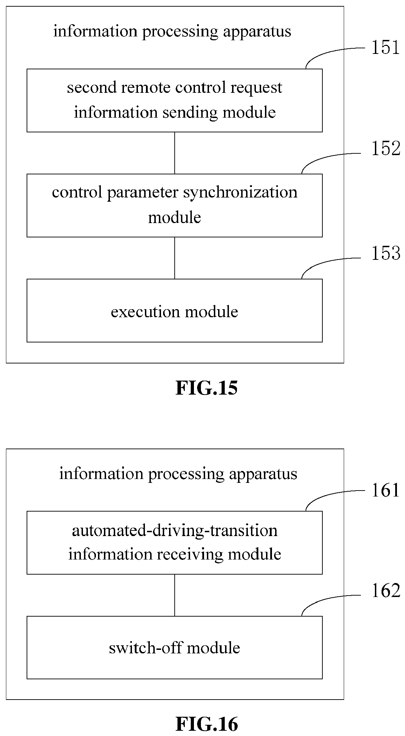

An embodiment of the present disclosure further provides a remote control apparatus which can be applied in a cab. As shown in FIG. 15, the apparatus includes:
a second remote control request information sending module 151, configured for sending second remote control request information to the cloud;
a control parameter synchronization module 152, configured for receiving a control parameter synchronization signal of the cab sent by the cloud, and performing synchronization of a control parameter with the cab according to the control parameter synchronization signal; and
an execution module 153, configured for, after a control channel between a vehicle and the cab is switched on, receiving a control signal by the cab against the vehicle and sending a response signal by the vehicle against the control signal to the cab through the control channel.

In an embodiment, as shown in FIG. 16, the remote control apparatus further includes:
an automated-driving-transition information receiving module 161, configured for receiving automated-driving-transition information sent by the cloud; and
a switch-off module 162, configured for performing automated driving according to the automated-driving-transition information, and stopping executing the step of receiving the control signal by the cab against the vehicle and sending the response signal by the vehicle against the control signal to the cab through the control channel.

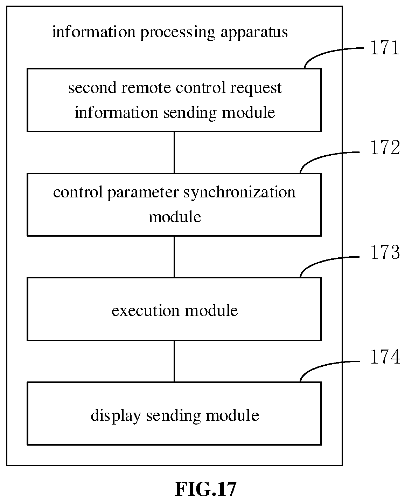

In an embodiment, as shown in FIG. 17, the remote control apparatus includes a second remote control request information sending module 171, a control parameter synchronization module 172 and an execution module 173 which are the same with the above-mentioned modules 151, 152 and 153 respectively, and further includes:
a display sending module 174, configured for sending a video stream and a data stream of the vehicle for display to the cloud.

In an embodiment, protocols used when the video stream of the vehicle for display is sent to the cloud are a user datagram protocol and a real-time transmission protocol based on the user datagram protocol.

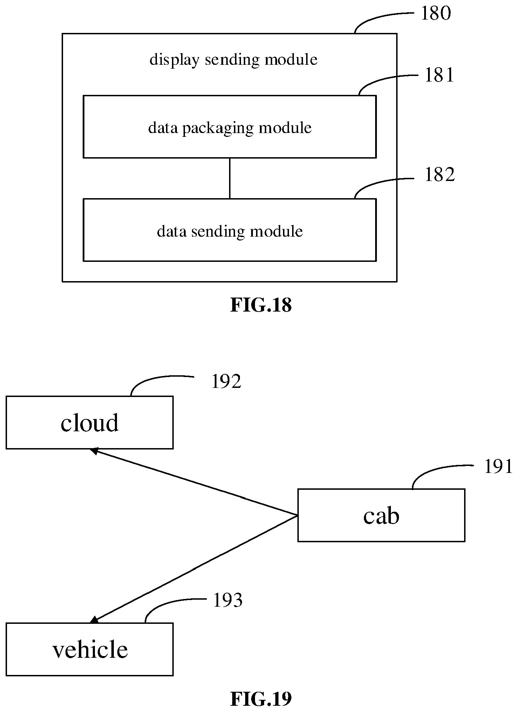

In an embodiment, as shown in FIG. 18, the display sending module 180, which is the same with above-mentioned module 174, includes:
a data packaging module 181, configured for packaging the data stream into data in a digital video format; and
a data sending module 182, configured for sending the data in the digital video format to the cloud through a transmission control protocol link in real-time communication.

In an example of the present disclosure, as shown in FIG. 19, there is provided a remote control system, and the system includes: a first remote control apparatus provided in a cab 191, a second remote control device provided in a cloud 192 and a third remote control device provided in a vehicle 193. The first remote control apparatus can be the remote control apparatus according to any one of embodiments of the present disclosure which can be applied in the cab, the second remote control apparatus can be the remote control apparatus according to any one of embodiments of the present disclosure which can be applied in the cloud, and the third remote control apparatus can be the remote control apparatus according to any one of embodiments of the present disclosure which can be applied in the vehicle.

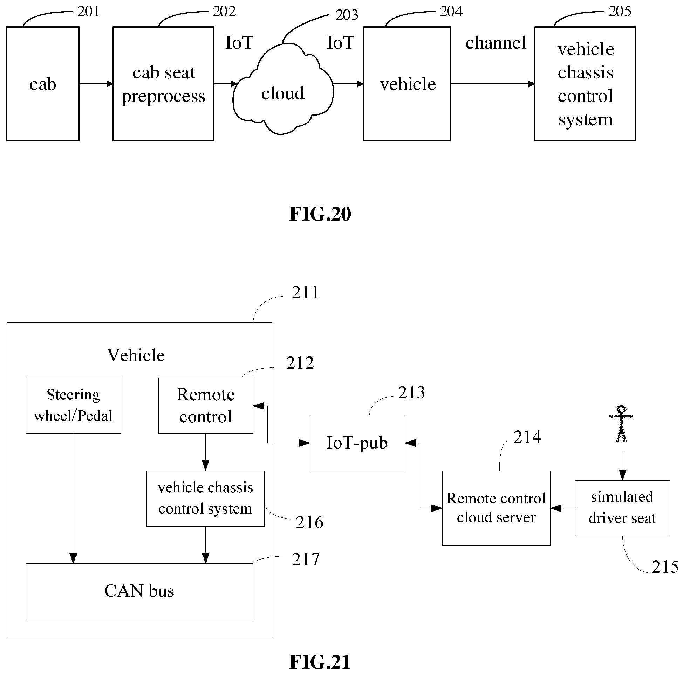

In an embodiment, as shown in FIG. 20, the seat_preprocess (cab seat preprocess 202) process of the cab (driver_seat) 201 reads a driving control parameter through the U port of the cab, and the control parameter may specifically include parameters of the steering wheel, brake, accelerator, gear and other control components are read at a frame rate of 10hz. According to the read control parameters, an initial control parameter synchronization signal is generated. Original initial control parameter synchronization signal is generated at the cab 201 and converted according to the message format of control_cmd on the actual vehicle, and the accelerator and idling speed of the cab 201 are reduced by 50% for safety reasons. The initial control parameter synchronization signal is converted into proto msg, then serialized, and sent to the cloud 203 through IoT communication. Generally, the cab 201 sends an initial control parameter synchronization signal to the cloud in a case that the cab 201 and the vehicle 204 are stopped and the accelerator and speed are both zero.

Still referring to FIG. 20, after the cloud 203 receives and transparently transmits the initial control parameter synchronization signal from the cab, forwards it to the specified IoT topic (control channel) according to the source of requesting connection, and sends time status on the vehicle 204 back to the seat_preprocess for time calibration.

Still referring to FIG. 20, the remote control module (remote_control) of the vehicle 204 receives the control message and verifies the source and timestamp of the message, discards the message with too much delay, and actively reports the abnormality to the security module of the vehicle for the vehicle to take over the control authority in a case that it continues to discard.

Still referring to FIG. 20, after the vehicle 204 takes control, remote_control continues to send control commands to the vehicle chassis control system 205 (canbus_proxy) through the signal transmission channel (channel) inside the vehicle. The frame rate is 10hz. After the takeover, stop the vehicle before exiting.

As shown in FIG. 21, the vehicle 211 is provided with a remote control module 212, which communicates with the cloud subscription module (IoT-pub, Internet of Things) 213 and the remote control cloud service 214 in a subscription or publishing (Sub/pub, Subscriber/publisher) manner. In the initial stage of control, the signal generated by the simulated driver seat 215 in the cab is transmitted to the vehicle 211 through the remote control cloud service 214 in the subscription or publishing manner. The signal received by the remote control module of the vehicle 211 is sent to the CAN Bus 217 through the vehicle chassis control system 216.

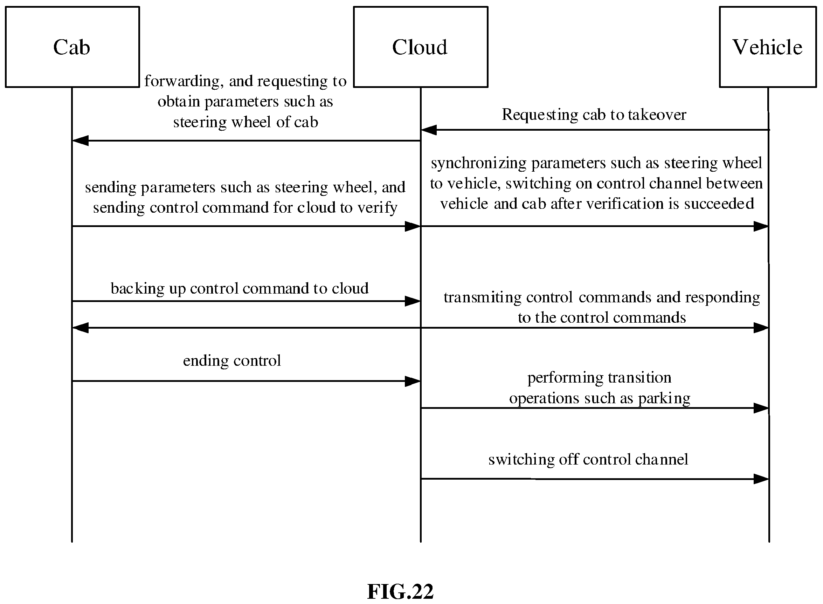

In an example of the present disclosure, as shown in FIG. 22, the information processing process of the remote control system is as follow.

Before encountering a situation that requires remote control, the system can be in automated driving mode.

When encountering a situation that requires remote control, the vehicle requests the cab to take over the control and generates a second remote control request, and the system enters the safe mode.

The cloud forwards according to the second remote control request, generates the first remote control request, and requests to obtain parameters such as the steering wheel of the cab.

The cab sends parameters such as the steering wheel, and sends a control instruction for cloud verification.

The cloud synchronizes the parameters such as the steering wheel to the vehicle, performs information verification and checking of Parking gear in the cab, and switches on the control channel between the vehicle and the cab after the verification is succeeded.

After the control channel is switched on, the system enters the direct control mode from the safe mode, and the vehicle and the cab transmit control commands and respond to the control commands through the control channel.

After the remote control ends, the cab sends control-ending information to the cloud, and performs checking of Parking gear in the cab, and the system enters the safe mode again.

The cloud controls the vehicle to perform transition operations such as parking.

After the vehicle is stopped, the control channel between the vehicle and the control compartment is switched off, the remote control is ended, and the system can enter the automated driving mode again.

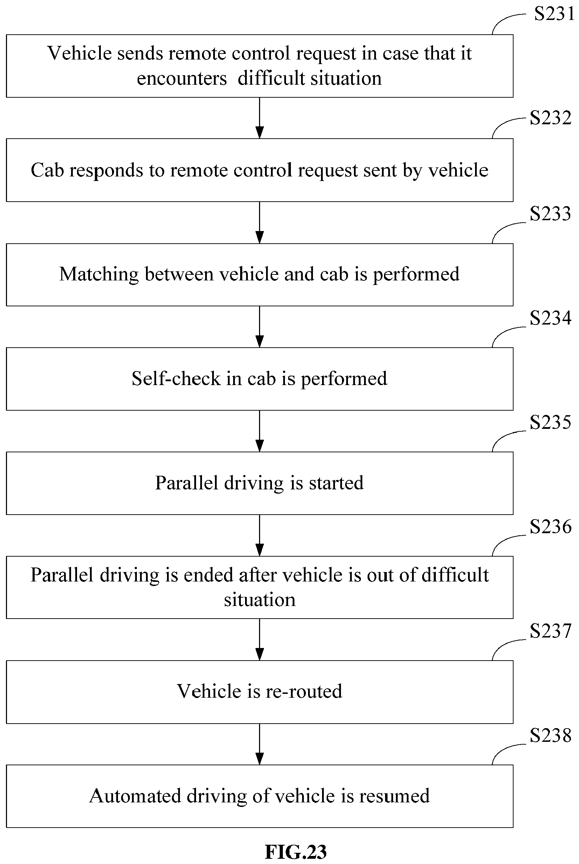

In an example of the present disclosure, as shown in FIG. 23, the processing process of the remote control system is as follow.

Step S231. The vehicle sends a remote control request in a case that it encounters a difficult situation.

Step S232. The cab responds to the remote control request sent by the vehicle. Specifically, the driver in the cab can click the corresponding button (such as the accept button) in the cab to send the response message.

Step S233. The matching between the vehicle and the cab is performed, and thus the cab and the controlled vehicle have a corresponding relationship.

Step S234. A self-check in the cab is performed.

Step S235. Parallel driving is started.

Step S236. Parallel driving is ended after the vehicle is out of the difficult situation.

Step S237. The vehicle is re-routed.

Step S238. Automated driving of the vehicle is resumed.

According to the embodiments of the present disclosure, the present disclosure further provides an electronic device and a readable storage medium.

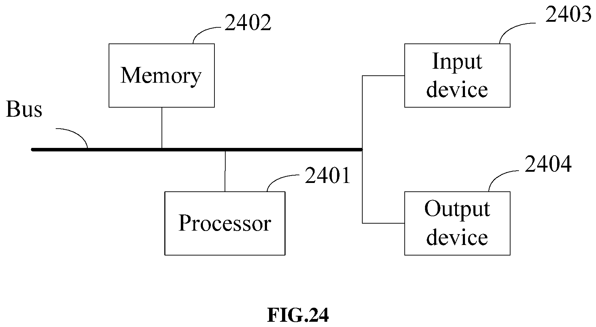

FIG. 24 is a block diagram of an electronic device configured for implementing an information processing method according to an embodiment of the present disclosure. The electronic device may be an aforementioned deployment device or proxy device. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital processing, cellular telephones, smart phones, wearable devices, and other similar computing apparatus. The components shown herein, their connections and relationships, and their functions are by way of example only and are not intended to limit the implementations of the present disclosure described and/or claimed herein.

As shown in FIG. 24, the electronic device includes: one or more processors 2401, a memory 2402, and interfaces for connecting various components, including highspeed interfaces and low-speed interfaces. The various components are interconnected using different buses and may be mounted on a common motherboard or otherwise as desired. The processor may process instructions for execution within the electronic device, including instructions stored in the memory or on the memory to display graphical information of a Graphical User Interface (GUI) on an external input/output device, such as a display device coupled to the interface. In other embodiments, multiple processors and/or multiple buses and multiple memories may be used with multiple memories if desired. Similarly, multiple electronic devices may be connected, each providing part of the necessary operations (e.g., as an array of servers, a set of blade servers, or a multiprocessor system). In FIG. 24, one processor 2401 is taken as an example.

The memory 2402 is a non-transitory computer-readable storage medium provided herein. The memory stores instructions executable by at least one processor to enable the at least one processor to implement the information processing method provided by the present disclosure. The non-transitory computer-readable storage medium of the present disclosure stores computer instructions for enabling a computer to implement the information processing method provided by the present disclosure.

The memory 2402, as a non-transitory computer-readable storage medium, may be used to store non-transitory software programs, non-transitory computer-executable programs, and modules, such as program instructions/modules (e.g., first remote control request information receiving module 81, control parameter synchronization signal sending module 82, verification information sending module 83, and controlling module 84 shown in FIG. 8) corresponding to the information processing method of embodiments of the present disclosure. The processor 2401 executes various functional applications of the server and data processing, i.e., the information processing method in the above-mentioned method embodiment, by operating non-transitory software programs, instructions, and modules stored in the memory 2402.

The memory 2402 may include a program storage area and a data storage area, wherein the program storage area may store an application program required by an operating system and at least one function; the data storage area may store data created according to the use of the electronic device. In addition, the memory 2402 may include a high speed random access memory, and may also include a non-transitory memory, such as at least one magnetic disk storage device, a flash memory device, or other non-transitory solid state memory device. In some embodiments, the memory 2402 may optionally include memories remotely located with respect to processor 2401, which may be connected via a network to the electronic device for information processing. Examples of such networks include, but are not limited to, the Internet, intranet, local area networks, mobile communication networks, and combinations thereof.

The electronic device of the information processing method may further include: an input device 2403 and an output device 2404. The processor 2401, the memory 2402, the input device 2403, and the output device 2404 may be connected via a bus or otherwise. FIG. 24 takes a bus connection as an example.

The input device 2403 may receive input numeric or character information and generate key signal inputs related to user settings and functional controls of the electronic device, such as input devices including touch screens, keypads, mice, track pads, touch pads, pointing sticks, one or more mouse buttons, trackballs, joysticks, etc. The output device 2404 may include display devices, auxiliary lighting apparatuses (e.g., LEDs), tactile feedback devices (e.g., vibration motors), and the like. The display device may include, but is not limited to, a Liquid Crystal Display (LCD), a Light Emitting Diode (LED) display, and a plasma display. In some embodiments, the display device may be a touch screen.

Various embodiments of the systems and techniques described herein may be implemented in digital electronic circuit systems, integrated circuit systems, Application Specific Integrated Circuits (ASICs), computer hardware, firmware, software, and/or combinations thereof. These various embodiments may include: implementation in one or more computer programs which can be executed and/or interpreted on a programmable system including at least one programmable processor, and the programmable processor may be a dedicated or general-purpose programmable processor which can receive data and instructions from, and transmit data and instructions to, a memory system, at least one input device, and at least one output device.

These computing programs (also referred to as programs, software, software applications, or codes) include machine instructions of a programmable processor, and may be implemented using high-level procedural and/or object-oriented programming languages, and/or assembly/machine languages. As used herein, the terms "machine-readable medium" and "computer-readable medium" refer to any computer program product, device, and/or apparatus (e.g., magnetic disk, optical disk, memory, programmable logic device (PLD)) for providing machine instructions and/or data to a programmable processor, including a machine-readable medium that receives machine instructions as machine-readable signals. The term "machine-readable signal" refers to any signal used to provide machine instructions and/or data to a programmable processor.

To provide for interaction with a user, the systems and techniques described herein may be implemented on a computer having: a display device (e.g., a Cathode Ray Tube (CRT) or Liquid Crystal Display (LCD) monitor) for displaying information to a user; and a keyboard and a pointing device (e.g., a mouse or a trackball) by which a user can provide input to the computer. Other types of devices may also be used to provide interaction with a user; for example, the feedback provided to the user may be any form of sensory feedback (e.g., visual feedback, audile feedback, or tactile feedback); and input from the user may be received in any form, including acoustic input, audio input, or tactile input.

The systems and techniques described herein may be implemented in a computing system that includes a background component (e.g., as a data server), or a computing system that includes a middleware component (e.g., an application server), or a computing system that includes a front-end component (e.g., a user computer having a graphical user interface or a web browser through which a user may interact with embodiments of the systems and techniques described herein), or in a computing system that includes any combination of such background component, middleware component, or front-end component. The components of the system may be interconnected by digital data communication (e.g., a communication network) of any form or medium. Examples of the communication network include: Local Area Networks (LANs), Wide Area Networks (WANs), and the Internet.

The computer system may include a client and a server. The client and the server are typically remote from each other and typically interact through a communication network. A relationship between the client and the server is generated by computer programs operating on respective computers and having a client-server relationship with each other. The server can be a cloud server, also called a cloud computing server or a cloud host. It is a host product in the cloud computing service system to solve the shortcomings of difficult management and weak business scalability in traditional physical hosting and Virtual Private Server (VPS) services. The server can also be a server of a distributed system, or a server combined with a blockchain.

According to the technical solutions of the embodiments of the present disclosure, in a case that the vehicle needs to request remote driving, it can send to the cloud information requesting remote control from the cab, and after the cloud forwards the information, the cab and the vehicle synchronize the control parameters, afterwards, through the control channel between the cab and the vehicle, the control signal between the cab and the vehicle and the response signal against the control signal or other signals necessary for the vehicle driving are transmitted, so as to realize the remote control of the vehicle from the cab. It can solve the problem of requesting remote assistance in a case that an autonomous vehicle or a non-autonomous vehicle encounters a situation that requires remote control.

It will be appreciated that the various forms of flow, reordering, adding or removing steps shown above may be used. For example, the steps recited in the present disclosure may be performed in parallel or sequentially or may be performed in a different order, so long as the desired results of the technical solutions disclosed in the present disclosure can be achieved, and no limitation is made herein.

The above-mentioned specific embodiments are not to be construed as limiting the scope of the present disclosure. It will be apparent to those skilled in the art that various modifications, combinations, sub-combinations and substitutions are possible, depending on design requirements and other factors. Any modifications, equivalents, and improvements within the spirit and principles of the present disclosure are intended to be included within the scope of the present disclosure.

## Claims

1. A remote control method, comprising:
receiving (S11, S21, S31) first remote control request information sent by a cloud, the first remote control request information indicating that a vehicle requests for remote control;
sending (S12, S22, S32) a control parameter synchronization signal of a cab to the vehicle via the cloud, the control parameter synchronization signal being configured for synchronization of a control parameter between the vehicle and the cab;
sending (S13, S23, S33) verification information for taking over vehicle control to the cloud so as to enable the cloud to switch on a control channel between the vehicle and the cab based on the verification information; and
after the control channel between the vehicle and the cab is switched on, sending (S14, S24, S34) a control signal by the cab against the vehicle and receiving a response signal from the vehicle against the control signal by the cab through the control channel.

2. The method of claim 1, wherein,
the method further comprises:
acquiring (S25) a video stream and a data stream of the vehicle for display from the cloud; and
generating (S26) display information according to the video stream and the data stream, and displaying the display information on a corresponding display,
optionally, the method further comprises:
sending (S35) remote-control-stop request information to the cloud; and
receiving (S36) remote-control-stop information sent by the cloud, and stopping executing the step of sending the control signal by the cab against the vehicle and receiving the response signal from the vehicle against the control signal by the cab through the control channel.

3. A remote control method, comprising:
sending (S41) first remote control request information to a cab based on second remote control request information sent by a vehicle;
receiving (S42) a control parameter synchronization signal sent by the cab and verification information for taking over vehicle control;
sending (S43) the control parameter synchronization signal to the vehicle, the control parameter synchronization signal being configured for synchronization of a control parameter between the vehicle and the cab; and
switching (S44) on a control channel between the vehicle and the cab based on the verification information.

4. The method of claim 3, further comprising:
receiving remote-control-stop request information sent by the cab;
sending remote-control-stop information to the cab and sending automated-driving-transition information to the vehicle; and
switching off the control channel between the cab and the vehicle.

5. The method of claim 3, wherein,
the method further comprises:
acquiring a video stream and a data stream of the vehicle for display; and
sending the video stream and the data stream to the cab,
preferably, the method further comprises: after acquiring the video stream of the vehicle for display,
converting the video stream into a viewable network signal using a real-time communication network software toolkit; and
displaying the network signal through an authorized viewing account.

6. A remote control method, comprising:
sending (S51) second remote control request information to a cloud;
receiving (S52) a control parameter synchronization signal of the cab sent by the cloud, and performing synchronization of a control parameter with the cab according to the control parameter synchronization signal; and
after a control channel between a vehicle and the cab is switched on, receiving (S53) a control signal by the cab against the vehicle and sending a response signal by the vehicle against the control signal to the cab through the control channel.

7. The method of claim 6, wherein,
the method further comprises:
receiving automated-driving-transition information sent by the cloud; and
performing automated driving according to the automated-driving-transition information, and stopping executing the step of receiving the control signal by the cab against the vehicle and sending the response signal by the vehicle against the control signal to the cab through the control channel,
optionally, the method further comprises:
sending a video stream and a data stream of the vehicle for display to the cloud.

8. A remote control apparatus, comprising:
a first remote control request information receiving module (81, 91, 101), configured for receiving first remote control request information sent by a cloud, the first remote control request information indicating that a vehicle requests for remote control;
a control parameter synchronization signal sending module (82, 92, 102), configured for sending a control parameter synchronization signal of a cab to the vehicle via the cloud, the control parameter synchronization signal being configured for synchronization of a control parameter between the vehicle and the cab;
a verification information sending module (83, 93, 103), configured for sending verification information for taking over vehicle control to the cloud so as to enable the cloud to switch on a control channel between the vehicle and the cab based on the verification information; and
a controlling module (84, 94, 104), configured for, after the control channel between the vehicle and the cab is switched on, sending a control signal by the cab against the vehicle and receiving a response signal from the vehicle against the control signal by the cab through the control channel.

9. The apparatus of claim 8, wherein,
the apparatus further comprises:
a display data receiving module (95), configured for acquiring a video stream and a data stream of the vehicle for display from the cloud; and
a displaying module (96), configured for generating display information according to the video stream and the data stream, and displaying the display information on a corresponding display,
optionally, the apparatus further comprises:a remote-control-stop request sending module (105), configured for sending remote-control-stop request information to the cloud; and
a remote-control-stop information receiving module (106), configured for receiving remote-control-stop information sent by the cloud, and stopping executing the step of sending the control signal by the cab against the vehicle and receiving the response signal from the vehicle against the control signal by the cab through the control channel.

10. A remote control apparatus, comprising:
a remote control request information forwarding module (111), configured for sending first remote control request information to a cab based on second remote control request information sent by a vehicle;
a verification and synchronization receiving module (112), configured for receiving a control parameter synchronization signal sent by the cab and verification information for taking over vehicle control;
a synchronous forwarding module (113), configured for sending the control parameter synchronization signal to the vehicle, the control parameter synchronization signal being configured for synchronization of a control parameter between the vehicle and the cab; and
a verification module (114), configured for switching on a control channel between the vehicle and the cab based on the verification information.

11. The apparatus of claim 10, further comprising:
a remote-control-stop request receiving module (121), configured for receiving remote-control-stop request information sent by the cab;
a transition control module (122), configured for sending remote-control-stop information to the cab and sending automated-driving-transition information to the vehicle; and
a switch-off module (123), configured for switching off the control channel between the cab and the vehicle.

12. The apparatus of claim 16, wherein,
the apparatus further comprises:
a display data transfer receiving module (131), configured for acquiring a video stream and a data stream of the vehicle for display; and
a display data transfer sending module (132), configured for sending the video stream and the data stream to the cab,
preferably, the apparatus further comprises:
a video stream data conversion module (141), configured for converting the video stream into a viewable network signal using a real-time communication network software toolkit; and
a video stream data displaying module (142), configured for displaying the network signal through an authorized viewing account.

13. A remote control apparatus, comprising:
a second remote control request information sending module (151, 171), configured for sending second remote control request information to the cloud;
a control parameter synchronization module (152, 172), configured for receiving a control parameter synchronization signal of the cab sent by the cloud, and performing synchronization of a control parameter with the cab according to the control parameter synchronization signal; and
an execution module (153, 173), configured for, after a control channel between a vehicle and the cab is switched on, receiving a control signal by the cab against the vehicle and sending a response signal by the vehicle against the control signal to the cab through the control channel.

14. The apparatus of claim 13, wherein,
the apparatus further comprises:
an automated-driving-transition information receiving module (161), configured for receiving automated-driving-transition information sent by the cloud; and
a switch-off module (162), configured for performing automated driving according to the automated-driving-transition information, and stopping executing the step of receiving the control signal by the cab against the vehicle and sending the response signal by the vehicle against the control signal to the cab through the control channel,
optionally, the apparatus further comprises:
a display sending module (174, 180), configured for sending a video stream and a data stream of the vehicle for display to the cloud.

15. A computer program product, comprising a computer program which, when executed by a processor, implements the method of any one of claims 1 to 7.
